# EUROPÄISCHE PATENTSCHRIFT

(11) **EP 2 299 176 B1**
(45) Veröffentlichungstag und Bekanntmachung des Hinweises auf die Patenterteilung: **06.08.2014**
(21) Anmeldenummer: 10174156.9
(22) Anmeldetag: 26.08.2010
(51) Int. Cl.: F23J 15/00, B01D 53/62, B01D 53/83, B01D 53/96, F23C 10/10, F28D 15/00

(54) **Verfahren und Einrichtung zur Abscheidung von CO2 aus Abgas**
Method and device for separating CO2 from waste gases
Procédé et dispositif destinés à la séparation de CO2 à partir de gaz d'échappement

(30) Priorität: 28.08.2009 DE 102009039055
(43) Veröffentlichungstag der Anmeldung: 23.03.2011
(73) Patentinhaber: Technische Universität Darmstadt, 64287 Darmstadt (DE)
(72) Erfinder: Epple, Prof. Dr.-Ing. Bernd, 64395, Brensbach (DE); Seeber, Joachim, 73249, Wernau (DE)
(74) Vertreter: Rüger, Barthelt & Abel

(56) Entgegenhaltungen:
- EP-A1- 1 495 794
- WO-A1-02/50474
- WO-A1-2007/045048
- DE-A1-102007 015 082

## Beschreibung

Gegenstand der Erfindung ist insbesondere die Abscheidung von CO₂ aus Abgasen, die durch Verbrennung eines kohlenstoffhaltigen Brennstoffs unter Zuhilfenahme von Luft als Oxidationsmittel entstehen. Solche Brennstoffe sind insbesondere Kohle, Erdgas, Erdöl, Müll, Holz, Kunststoffe, Gummi, sonstige Abfälle oder dergleichen.

Zur Abscheidung von CO₂ aus CO₂-haltigen Abgasen ist es bekannt, ein feinkörniges Feststoff-Sorbens zu nutzen, das bei einer hohen Temperatur (beispielsweise oberhalb 900°C) CO₂ abgibt und bei einer niedrigeren Temperatur (zum Beispiel 650°C) CO₂ aufnimmt. Zum Beispiel wird als Sorbens CaO, d.h. Kalziumoxid bzw. gebrannter Kalk eingesetzt und innerhalb eines Karbonat-Kreislaufsystems im Kreislauf gefahren.

Ein entsprechendes System ist beispielsweise aus der WO 2007/045048 A1 bekannt. Diese Druckschrift offenbart ein Karbonat-Kreislaufsystem, das an den Ausgang einer Brennkammer anzuschließen ist. Das heiße Abgas wird zur Erhitzung der Wandung eines Kalzinators genutzt, der von oben nach unten von einem Kalziumkarbonatgranulat durchrieselt wird. Danach wird das noch heiße Gas einem Dampferzeuger zugeführt. In diesem kühlt es sich ab und wird dann in den Karbonisator geleitet, der von dem zuvor erzeugten Sorbens, nämlich CaO, durchrieselt wird. Das dabei entstehende Karbonatgranulat wird wieder in der Kalzinator gegeben. Dem Abgas wird im Karbonisator das CO₂ entzogen. Das verbleibende Restgas wird nochmals einem Dampfwärmetauscher zugeführt.

Dieses System eignet sich nicht zur Nachrüstung an Großdampferzeugern.

EP 1 495 794 A1 betrifft ein Verfahren zur Abtrennung von CO₂ aus Verbrennungsgasen. In einer Brennkammer wird Brennstoff verbrannt. Ein Teil der dabei erzeugten Wärme wird einem Kalzinierer zugeführt. Zwischen dem Kalzinierer und einem Karbonator werden Festmassenströme transportiert.

Weiter schlägt zum Beispiel die DE 10 2007 015 082 A1 vor, einen Dampferzeuger mit einer CO₂-Abscheideeinrichtung zu versehen, die ebenfalls auf einem Karbonat-Kreislaufsystem beruht. Zur Erzeugung eines sorbens, d.h. zur Kalzinierung eines Karbonats, ist dazu in einem Dampferzeuger im unteren Kesselbereich eine entsprechende Rohrschlange vorgesehen, die von in einem CO₂-Strom getragenen CaCO₃-Feststoffpartikeln durchströmt wird. Durch die Wärmeeinwirkung findet eine Kalzinierung, also die Spaltung von CaCO₃ zu CaO und CO₂ statt.

Alternativ wird ein im unteren Kesselwandbereich ausgeleiteter und wieder in den Dampferzeuger rückgeleiteter Gasstrom über Regeneratoren geführt, die abwechselnd der Kalzinierung dienen.

Auch dieses System ist nur beschränkt nachrüstfähig.

Aus der noch unveröffentlichten DE 10 2008 050 816 wie auch aus der Druckschrift "Process Optimization in Post-Combustion CO2 Capture by Means for Repowering and Reversable Carbonation/Calcination Cycle" von Louis M. Romeo und anderen, Endesa, Spanien, 8. Internationale Konferenz über Technologien zur Kontrolle von Treibhausgasen, Trontheim, Juni 2006, Norwegen, sind Verfahren zur Abscheidung von CO₂ aus Abgasen mittels eines Karbonatzyklus bekannt. Wenigstens ein Teil der zum Kalzinieren erforderlichen Wärme wird durch Zufeuerung im Kalzinierer erzeugt, bei der Kohle mittels Zugabe von Sauerstoff verfeuert wird.

Diese Verfahren setzen die Bereitstellung von wenigstens technisch reinem Sauerstoff voraus. Die Bereitstellung von Sauerstoff ist mit hohem Energieaufwand verbunden.

Es ist Aufgabe der Erfindung, ein einfaches und verlässliches, insbesondere energieeffizientes Verfahren zur CO₂-Abscheidung aus Abgasen zu schaffen.

Weiter ist es Aufgabe der Erfindung, eine entsprechende Vorrichtung zur CO₂-Abscheidung zu schaffen. Die zu schaffenden Verfahren und Vorrichtungen sollen möglichst vielseitig einsetzbar sein.

Diese Aufgaben werden mit dem Verfahren nach Anspruch 1 bzw. der Vorrichtung nach Anspruch 10 gelöst:
Das erfindungsgemäße Verfahren zur Abscheidung von CO₂ aus dem Abgas einer Brennkammer beruht auf einem Karbonat-Kreislauf-System, bei dem vorzugweise CaO als Sorbens zur gezielten Adsorption und Desorption von CO₂ dient. Die zur Desorption, d.h. z.B. zum Brennen des Karbonats erforderliche Wärme wird in einer der Beheizung des Desorbers dienenden Desorberwärme-Brennkammer unter Nutzung von Brennstoff und Luft als Oxidationsmittel erzeugt. Die so erzeugte Wärme wird dem Desorber, bspw. einem Kalzinierer, über einen Wärmetauscher zugeführt. Als Wärmetauscher können prinzipiell Regeneratoren, zum Beispiel keramische Regeneratoren dienen. Insbesondere aber wird es als vorteilhaft angesehen, Heatpipes zu nutzen, die die Wärme von der Desorberwärme-Brennkammer oder einem diese durchströmenden Stoffstrom auf den Desorber übertragen. Solche Heatpipes können insbesondere Kalium oder Natrium als Wärmeübertragungsmedium nutzen. Andere Wärmeübertrager und Heatpipes mit anderen Wärmeübertragungsmedien, z.B. Helium sind anwendbar.

Ein Hauptvorteil des erfindungsgemäßen Verfahrens und einer erfindungsgemäßen Vorrichtung liegt in der Verwendung von Luft als Oxidationsmittel bei der Bereitstellung der Desorptionswärme. Dies wird durch die indirekte Beheizung des Desorbers über Wärmetauscher, Regeneratoren oder dergleichen möglich.

Ein weiterer nicht unerheblicher Vorteil liegt in der möglichen strikten stofflichen Trennung zwischen Aschenbestandteilen, die in der Desorberwärme-Brennkammer anfallen können, und dem Sorbens. Bei Verwendung von Kohle als Brennstoff für die Desorberwärme-Brennkammer ist davon auszugehen, dass die dort anfallende Asche zumindest in einem gewissem Maß störende Begleitstoffe, wie zum Beispiel Quecksilber etc. enthält. Diese Begleitstoffe können bei Nutzung des erfindungsgemäßen Verfahrens und der erfindungsgemäßen Einrichtung wirksam von dem Sorbens ferngehalten werden. Die Deaktivierung des Sorbens durch entsprechende Störstoffe wird so verhindert.

Außerdem ermöglichen das erfindungsgemäße Verfahren und die entsprechende Vorrichtung einen schonenden Umgang mit dem Sorbens, z.B. CaO. Übermäßige mechanische, chemische und thermische Beanspruchungen werden vermieden. Es wird für eine milde Erwärmung ohne Ausbildung lokaler Hotspots gesorgt. Lokale Temperaturspitzen, die sonst zur Versinterung des Sorbens und zum Verschmelzen mit Asche und somit zur Deaktivierung führen könnten, werden durch den Verzicht auf Beheizung mit reinem Sauerstoff wirksam unterbunden. Die Wärmeübertragung auf den Desorber und das Sorbens durch Regeneratoren, Rekuperatoren oder Heatpipes ist schonend und führt zu entsprechender Langlebigkeit des Sorbens. Sonst durch thermische und mechanische Beanspruchung auftretende Korngrößenverminderung durch fortschreitende Zerkleinerung des Sorbensmaterials und damit einhergehende Schwierigkeiten bei der Trennung von Gasstrom und Sorbens werden weitgehend vermieden. Der Ersatzstoffbedarf, bei CaO als Sorbens insbesondere der Kalkbedarf des Prozesses wird dadurch gesenkt.

Das erfindungsgemäße System ist sowohl an vorhandenen Anlagen nachrüstbar als auch als eigenständiger Wärmeerzeuger einsetzbar.

Die Umsetzung des erfindungsgemäßen Verfahrens ist an einem Dampferzeuger herkömmlicher Bauart möglich, ohne diesen baulich verändern zu müssen. Insbesondere sind keine Änderungen an dem Kessel oder seinen Einbauten erforderlich. Bei dem erfindungsgemäßen Verfahren kann nahezu die gesamte für die Beheizung des Desorbers erforderliche Wärmemenge zur Dampferzeugung genutzt werden. Dies ist möglich, indem entsprechende Vorrichtungen zur Wärmeauskopplung vorgesehen werden, die die im Absorber anfallende Wärme den das System verlassenden Stoffströmen entziehen. Damit kann erreicht werden, dass der Wirkungsgrad eines mit CO₂-Abscheidung versehenen Kraftwerks (ohne CO₂-Komression) nicht wesentlich unter dem Wirkungsgrad eines herkömmlichen Kraftwerks liegt.

Die Zeichnung, die Beschreibung und Unteransprüche richten sich auf weitere vorteilhafte Details. Die Beschreibung beschränkt sich dabei auf wesentliche Aspekte der Erfindung und damit zusammenhängender Gegebenheiten. Es zeigen:
Figur 1 Eine Wärmeerzeugungsanlage mit CO₂-Abscheidung in einer ersten Bauart, in schematisierter Darstellung.
Figur 2 eine Wärmeerzeugungsanlage mit CO₂-Abscheidung in einer zweiten Ausführungsform, in schematisierter Darstellung, und
Figur 3 eine Wärmeerzeugungsanlage in einer weiteren abgewandelten Ausführungsform mit CO₂-Abscheidung, in schematisierter Darstellung.

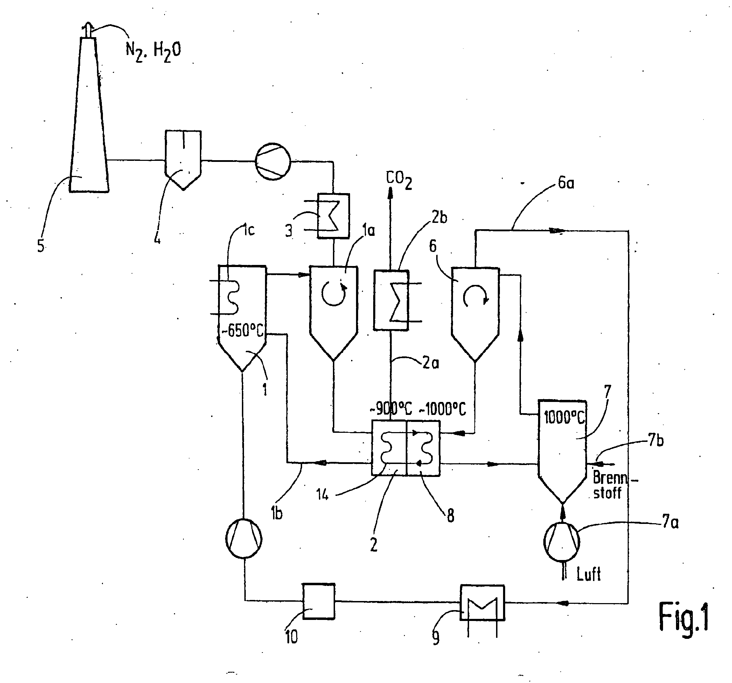

In Figur 1 ist ein Wärmeerzeugungssystem zu entnehmen, das Wärme durch Oxidation von Brennstoff erzeugt und aus dem entstehenden Abgas das darin enthaltene CO₂ (Kohlendioxid) abscheidet. Dazu dient ein Sorbens-Kreislaufsystem, zu dem mindestens ein Absorber 1 und ein Desorber 2 gehören. Von dem Absorber 1 führt eine Ausgangsleitung zu einer vorzugsweise vorgesehenen Abscheideeinrichtung 1a, zum Beispiel in Gestalt eines Zyklonabscheiders. Dieser trennt zumindest einen Teil des das Sorbens tragenden Gases ab und führt es über einen Wärmetauscher 3, ein Gebläse und einen zumindest optionalen Staubabscheider 4 beispielsweise zu einem Kamin 5, der das entsprechende, im Wesentlichen von CO₂ befreite Gas in die Umwelt entlässt. Ein anderer Ausgang der Abscheideeinrichtung 1a ist an den Desorber 2 angeschlossen, um diesem das CO₂-beladene, durch einen Gasstrom fluidisierte Sorbens beispielsweise in granulierter oder pulvriger Form zuzuführen. Der Desorber 2 dient der Regenerierung des Sorbens, das dem Absorber 1 wiederum über eine Leitung 1b zugeführt wird.

An dem Absorber 1 kann eine geeignete Einrichtung 1c zur Wärmeausleitung vorgesehen sein. Solche Mittel sind beispielsweise Heizschlangen eines Dampferzeugers oder dergleichen. Zusammen mit der von dem Wärmetauscher 3 gelieferten Wärme kann die von der Einrichtung 1c gelieferte Wärme einem Nutzungsprozess zugeführt werden. Dieser kann in der Dampf- und Stromerzeugung liegen.

Das im Kreislauf geführte Sorbens ist vorzugsweise CaO. Es nimmt in dem Absorber 1 CO₂ unter Bildung von Kalziumkarbonat auf. Dieser Prozess ist exotherm. Die anfallende Wärme wird über die Einrichtung 1c zumindest teilweise abgeführt.

In dem Desorber 2 wird das CO₂-tragende feinkörnige Sorbens regeneriert, indem es auf eine erhöhte Temperatur von beispielsweise etwa 900°C gebracht wird. Es kann nun in einem endothermen Prozess das gebundene CO₂ freisetzen. Dieses wird über eine entsprechende Leitung 2a abgeführt. Optional kann es dabei durch einen Wärmetauscher 2b geleitet werden, um die enthaltene Wärme einem Nutzungsprozess, wie beispielsweise der Dampf- und/oder Stromerzeugung zuzuführen. Je nach Ausnutzung der enthaltenen Wärme kann das abgeschiedene CO₂ in relativ kühlem Zustand abgegeben werden. Die Bereitstellung der für die Regenerierung erforderlichen Wärme erfolgt durch eine Beheizungseinrichtung, zu der vorzugsweise ein Feststoffabscheider 6, eine Feuerungsanlage 7 und ein entsprechender Fließbettkühler 8 gehören. Die Feuerungsanlage 7 ist vorzugsweise als zirkulierende Wirbelschichtfeuerung ausgebildet. Über ein entsprechendes Gebläse 7a wird der Feuerungsanlage 7 ständig Luft zugeführt. Über die gleiche oder eine andere Leitung 7b wird Brennstoff, beispielsweise in Form von gemahlener Kohle, in die Feuerungsanlage 7 geleitet. In dieser befindet sich ein fluidisiertes Festkörperbett, beispielsweise in Form aufgewirbelten Sands (Siliziumdioxyd) oder eines ähnlichen Stoffes. Das in dieses Wirbelbett eingetragene Kohlegranulat oxidiert gleichmäßig und kontrolliert, wodurch ein heißes Fließbett erzeugt wird. Diesem wird in dem Staubscheider 6 ein Teil des erzeugten Abgases entzogen, um über eine Leitung 6a abgeleitet zu werden. Diese führt die weitgehend von Festkörperpartikeln befreiten Abgase zu einem, zumindest optional vorgesehenen, Wärmetauscher 9, der der Wärmeausleitung dient. Beispielsweise dient der Wärmetauscher 9 der Dampferzeugung.

Die von den Partikeln des Fließbetts transportierte Wärme wird vollständig auf den Fließbettkühler 8 übertragen. Ein Teil der von dem Gastrom über die Leitung 6a abtransportierten Wärme wird über den Wärmetauscher 9 nutzbar gemacht.

Im weiteren Verlauf der Leitung 6a kann optional eine Entschwefelungseinrichtung 10 vorgesehen sein. Über ein Gebläse wird das durch die Entschwefelungseinrichtung 10 von Schwefel zumindest weitgehend befreite Abgas dann dem Absorber 1 zugeführt.

Das in der Feuerungsanlage 7 vorhandene, durch den Gasstrom fluidisierte Wirbelbett wird somit über den Feststoffabscheider 6 in den Fließbettkühler 8 und von diesem in die Feuerungsanlage 7 zurückgeleitet. Der Fließbettkühler 8 wird dadurch auf eine Temperatur von zum Beispiel ungefähr 1000°C gehalten.

Der Fließbettkühler 8 wird von einem Stoffstrom durchströmt, der im Wesentlichen aus fluidisierten Festkörpern wie vorwiegend Sandkörnern und Asche durchströmt wird, die von einem heißen Gasstrom getragen werden. Zur Kühlung dieses Fließbetts dient ein Wärmetauscher, beispielsweise in gestalt von Heatpipes 14, die dem Fließbett Wärme entziehen und an den Desorber 2 übertragen. Die Heatpipes können mit einem Wärmeübertragungsmedium gefüllte geschlossene Röhren, Rohrschlangen oder dergleichen sein. Als Wärmeübertragungsmedium kann Helium, Natrium oder ein ähnliches thermodynamisch geeignetes Medium Anwendung finden.

Die insoweit beschriebene Anlage arbeitet wie folgt:

In Betrieb etabliert sich ein Fließbettkreislauf von der Feuerungsanlage 7 über den Feststoffabscheider 6 und den Fließbettkühler 8. Dieser Kreislauf wird durch das Gebläse 7a aufrechterhalten, über das ständig Luft eingeblasen wird. Über die Leitung 7b wird vorzugsweise kontinuierlich Brennstoff zugeführt. Dieser oxidiert in dem Fließbett in der Feuerungsanlage 7 relativ gleichmäßig und heizt den Festkörperpartikel-Gas-Strom auf. In dem Feststoffabscheider 6 wird ein Teil des Trägergases als Abgas ausgeleitet. Dieses besteht vorwiegend aus Stickstoff und Kohlendioxyd und gegebenenfalls Wasserdampf. Der verbleibende Festkörperpartikel-Gas-Strom wird von dem Feststoffabscheider 6 in den Fließbettkühler 8 geleitet, wo er einen Teil der enthaltenen Wärme abgibt und sich etwas abkühlt. Er wird dann in die Feuerungsanlage 7 zurückgeleitet.

Die Heatpipes 14 übertragen die dem Fließbett entzogenen Wärme auf den Stoffstrom des Desorbers 2. Dieser wird dadurch auf eine Temperatur von etwa 900°C gebracht. Bei dieser Temperatur findet ein Desorptionsprozess statt. Wird als Desorptionsmittel CaO (Branntkalk) verwendet, wird dieses im Desorber 2 durch einen Regenerationsprozess aus CaCO₃ gewonnen. Das dabei entstehende CO₂ wird in technisch reiner Form über die Leitung 2a und den Kühler 2b abgeführt.

Über den Absorber 1, die Abscheideinrichtung 1a und den Desorber 2 wird ein Stoffkreislauf aufrechterhalten. Dieser besteht aus einem Gasstrom, der CaO Partikel bzw. CaCO₃ Partikel trägt. Diese haben vorzugsweise eine Größe von zum Beispiel 100 µm. Der Absorber 1 wird über ein Gebläse und die Leitung 6a ständig mit Abgas versorgt, das, wie oben erwähnt, aus Stickstoff und CO₂ und gegebenenfalls Wasserdampf besteht. Der Absorber 1 wird vorzugsweise kontrolliert auf einer Temperatur von ungefähr 650°C gehalten. Das unten zuströmende Abgas nimmt das ebenfalls unten über die Leitung 1b zuströmende Absorptionsmittel (CaO) auf und trägt es. Dabei regieren CO₂ und CaO zu CaCO₃. Der Prozess ist exotherm. Über die Einrichtung 1c wird sowohl die hier frei werdende Wärme wie auch zumindest ein Teil der in dem Abgas zuvor schon enthaltenen Wärme abgeführt.

An dem Ausgang gibt der Absorber 1 einen Gastrom ab, der im Wesentlichen aus Stickstoff und CaCO₃ besteht. Über die Abscheideeinrichtung 1a wird ein Teil des Stickstoffs sowie das mit CO₂ beladene Absorptionsmittel (CaCO₃) in den Desorber 2 geführt, wo der Kreislauf von neuem beginnt. In dem Desorber wird der Kalk (CaCO₃) gebrannt und somit das Sorptionsmittel regeneriert.

Der in der Abscheideeinrichtung 1a abgetrennte Stickstoff- und Wasserdampfstrom wird über den Wärmetauscher 3 gekühlt, wodurch die enthaltene Wärme beispielsweise zur Dampferzeugung nutzbar gemacht wird. Das abgekühlte Restgas wird in den Kamin 5 gegeben.

Bei der beschriebenen Ausführungsform gelangt der heiße gasgetragene Partikelstrom aus der Feuerungsanlage 7 zuerst in den Feststoffabscheider 6 und dann in den Fließbettkühler 8. Es ist aber auch möglich, die Reihenfolge umzukehren und den gasgetragenen Partikelstrom zuerst in den Fließbettkühler 8 und dann in den Staubabscheider zu leiten.

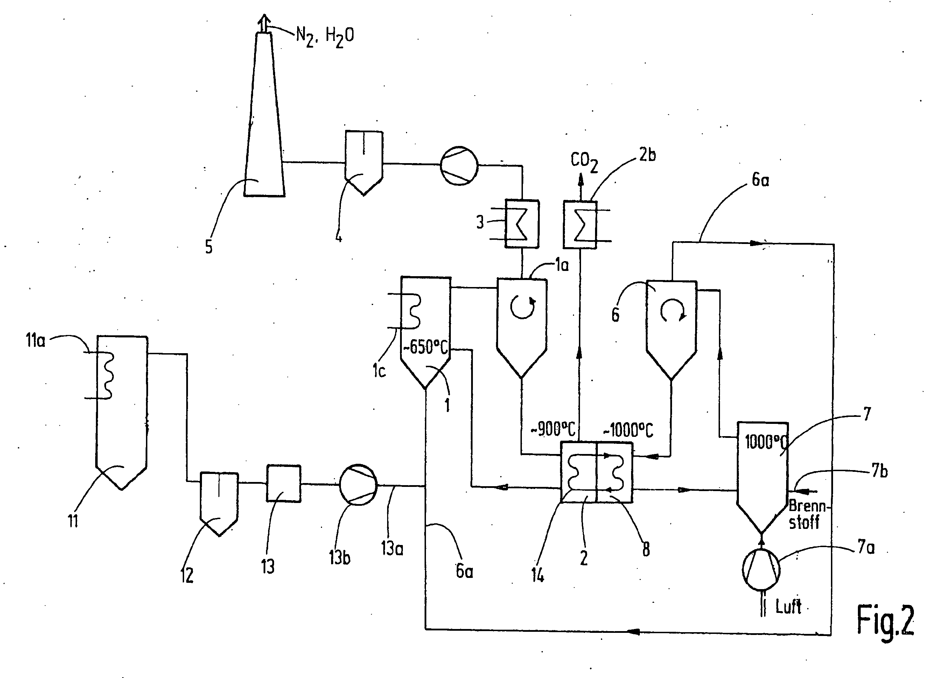

Figur 2 veranschaulicht eine abgewandelte Ausführungsform der erfindungsgemäßen Einrichtung zur CO₂-Abscheidung, wobei zur Erläuterung des Aufbaus und der Funktionsweise auf die vorige Beschreibung verwiesen wird. Soweit bereits eingeführte Bezugszeichen verwendet sind, gilt die vorstehende Beschreibung entsprechend.

Anders als bei der vorstehenden Ausführungsform wird dem Absorber 1 das Abgas aus der Feuerungsanlage 7 bzw. dem Feststoffabscheider 6 ungekühlt und ohne vorherige Schwefelabscheidung zugeführt. Es fehlen der Wärmetauscher 9 und die Entschwefelungseinrichtung 10. Falls gewünscht, können diese jedoch vorgesehen werden. Sie könnten auch entfallen - der Schwefel wird dann in dem Absorber 1 eingebunden. Die sonst von dem Wärmetauscher 9 ausgeleitete Wärme kann ersatzweise auch über die Einrichtung 1c ausgeleitet werden.

Der Absorber 1 wird bei der Ausführungsform nach Figur 2 zusätzlich zu dem Abgas, das über die Leitung 6a geführt wird, mit weiterem Abgas beschickt, das zum Beispiel aus einem Großdampferzeuger 11 stammt und über eine Leitung 13a bzw. ein Gebläse 13b herangeführt wird. Der Großdampferzeuger 11 ist in Figur 2 lediglich äußerst schematisiert angedeutet. Er kann als Rohrwandkessel ausgebildet sein, in dem außerdem Einbauten 11a zum Beispiel zur Dampfüberhitzung und/oder Speisewasservorwärmung vorgesehen sind. Das von dem Großdampferzeuger 11 abgegebene Abgas wird einem Staubabscheider 12 zugeführt und kann außerdem, zumindest optional, über eine Rauchgasentschwefelungsanlage 13 geführt werden bevor es in den Absorber 1 gelangt.

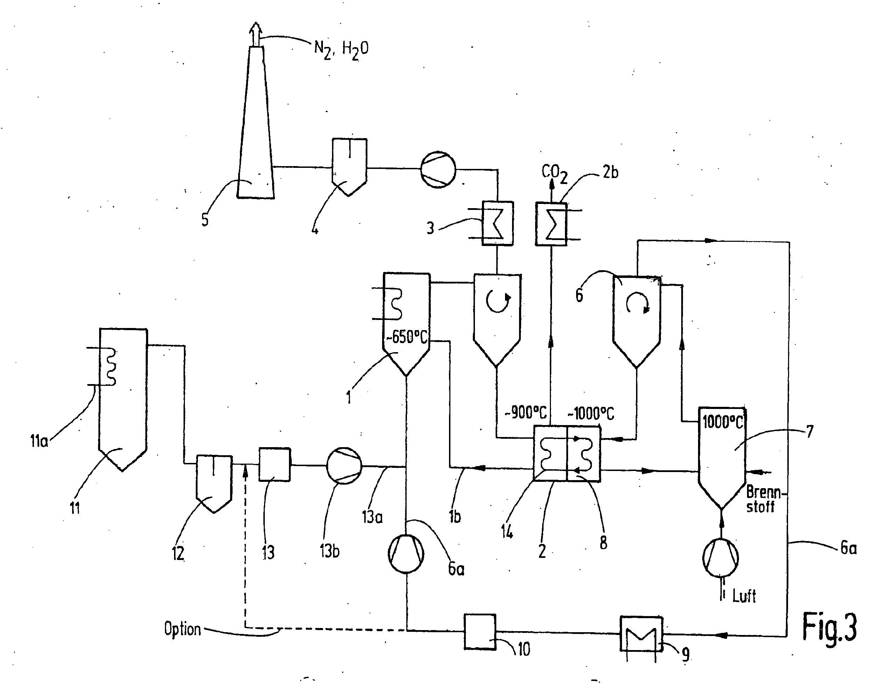

Eine weitere abgewandelte Ausführungsform zeigt Figur 3. Die dort veranschaulichte Anlage entspricht weitgehend der Anlage nach Figur 2, wobei jedoch in der Leitung 6a der Wärmetauscher 9, die Entschwefelungseinrichtung 10 und ein Gebläse vorgesehen sind. Die Leitungen 6a und 13a sind vor oder an dem Eingang des Absorbers 1 zusammengeführt. Es ist jedoch, wie in Figur 3 gestrichelt eingezeichnet, optional auch möglich, die Leitung 6a vor der Rauchgasentschwefelungsanlage 13 mit dem Abgaskanal 1 zu verbinden, der von dem Großdampferzeuger 11 bzw. dem Staubabscheider 12 herkommt. Im letzteren Fall kann die Entschwefelungseinrichtung 10 wieder entfallen.

Zur nachträglichen CO₂-Abscheidung an einer Feuerungsanlage zur Verbrennung von kohlenstoffhaltigen Brennstoffen (Kohle, Erdgas, Öl, Biomasse, Müll, etc.) ist eine CO₂-Abscheideranlage vorgesehen. In dieser wird das Abgas durch einen CO₂-Absorber 1 geleitet, in welchem CO₂ unter Erzeugung von CaCO₃ an CaO gebunden wird. Das CO₂ wird dann in einem Desorber 2 freigesetzt. Die im Desorber zur Aufrechterhaltung des endothermen Desorptionsprozesses notwendige Wärme wird vorzugsweise über Heatpipes 14 zugeführt. Die Heatpipes 14 werden über einen Fließbettkühler 8 beheizt. Der Fließbettkühler 8 wird über einen heißen Feststoffstrom beheizt, der aus einer Verbrennungsanlage 7 stammt. Die Abgase der Verbrennungsanlage 7 werden durch den CO₂-Absorber 1 geleitet. Das im Abgas enthaltene CO₂ wird dort weitgehend absorbiert. Das aus Stickstoff und gegebenenfalls Wasserdampf bestehende Restgas wird nach entsprechender Kühlung über einen Kamin 5 abgeleitet.

### Bezugszeichen

- 1: Absorber
- 1a: Abscheideeinrichtung /Feststoffabscheider
- 1c: Einrichtung zur Wärmeauskopplung
- 2: Desorber
- 2b: Wärmetauscher
- 3: Wärmetauscher
- 4: Staubabscheider /Staubfilter
- 5: Kamin
- 6: Staubabscheider / Feststoffabscheider
- 6a: Leitung
- 7: Feuerungsanlage
- 7a: Gebläse
- 7b: Leitung
- 8: Fließbettkühler
- 9: Wärmetauscher
- 10: Entschwefelungseinrichtung
- 11: Großdampferzeuger
- 11a: Einbauten / Wärmetauscher
- 12: Staubabscheider
- 13: Rauchgasentschwefelungsanlage
- 13a: Leitung
- 13b: Gebläse
- 14: Heatpipes

## Patentansprüche

1. Verfahren zur Abscheidung von CO₂ aus dem Abgas einer mit einem kohlenstoffhaltigen Brennstoff unter Zuhilfenahme von Luft als Oxidationsmittel befeuerten Brennkammer, wobei das Verfahren die Schritte umfasst:
Einleitung eines CO₂ enthaltenden und aus der Brennkammer ausgeleiteten Abgasstromes in einen Absorber (1) eines wenigstens einen Absorber (1) und einen Desorber (2) aufweisenden Sorbens-Kreislauf-Systems, in dem ein Sorbens im Kreislauf gefahren wird, wobei sich das Sorbens in dem Absorber (1) mit dem CO₂ des Abgasstroms chemisch verbindet und wobei das CO₂-beladene Sorbens als gasgetragener Feststoffpartikelstrom dem Desorber (2) zugeführt und in diesem unter Wärmezufuhr regeneriert wird, wodurch regeneriertes Sorbens und ein im Wesentlichen nur CO₂ enthaltendes Gas gebildet wird,
**dadurch gekennzeichnet,**
**dass** die zum Regenerieren des Sorbens erforderliche Wärme in einer der Beheizung des Desorbers (2) dienenden als Wirbelschicht-Brennkammer ausgeführte Desorberwärme-Brennkammer (7) durch Verbrennung eines Brennstoffes mit Luft als Oxidationsmittel erzeugt und dem Desorber über einen Wärmetauscher (14) zugeführt wird,
**dass** zwischen der Desorberwärme-Brennkammer (7) und dem Wärmetauscher (14) ein Stoffkreislauf durch einen fluidisierten Festkörper-Massenstrom etabliert wird, aus dem über eine Abscheideeinrichtung (6) Abgas ausgeleitet wird,
und **dass** die von den Partikeln des fluidisierten Festkörper-Massenstroms transportierte Wärme teilweise auf einen Fließbettkühler (8) übertragen wird, der über den Wärmetauscher (14) gekühlt wird, der dem Fließbett Wärme entzieht und an den Desorber (2) überträgt,
wobei die Desorberwärme-Brennkammer (7) nur der Beheizung des Desorbers (2) dient oder zusätzlich das in der Abscheideeinrichtung (6) ausgeleitete Abgas über einen der Wärmeauskopplung dienenden Wärmetauscher (9) geleitet wird.

2. Verfahren nach Anspruch 1, **dadurch gekennzeichnet, dass** das ausgeleitete Abgas dem Absorber (1) zugeführt wird.

3. Verfahren nach Anspruch 2, **dadurch gekennzeichnet, dass** ausgeleitete Abgas zunächst einer Entschwefelungseinrichtung (10) und dann dem Absorber (1) zugeführt wird.

4. Verfahren nach Anspruch 1, **dadurch gekennzeichnet, dass** dem Absorber (1) zusätzlich Abgas zugeführt wird, das aus mindestens einer weiteren Brennkammer (11) stammt.

5. Verfahren nach Anspruch 4, **dadurch gekennzeichnet, dass** die weitere Brennkammer (11) zu einem Dampferzeuger gehört.

6. Verfahren nach Anspruch 1, **dadurch gekennzeichnet, dass** das von dem Desorber (2) abgegebene Restgas über einen der Wärmeauskopplung dienenden Wärmetauscher (3) gleitet wird.

7. Verfahren nach Anspruch 1, **dadurch gekennzeichnet, dass** zwischen dem Desorber (2) und dem Absorber (1) ein Sorbens-Massenstrom etabliert ist, der aus dem durch einen Gastrom fluidisierten Karbonat und dem Sorbens besteht.

8. Verfahren nach Anspruch 7, **dadurch gekennzeichnet, dass** der Sorbens-Massenstrom über einen der Wärmeauskopplung dienenden Wärmetauscher (1c) geleitet wird.

9. Verfahren nach Anspruch 1, **dadurch gekennzeichnet, dass** mittels einer Abscheideeinrichtung (1a) aus dem Sorbens-Massenstrom ein im Wesentlichen CO₂-freies Restgas und ein CO₂-beladener Sorbensstrom gewonnen werden, der dem Desorber (2) zugeführt wird.

10. Vorrichtung zur Abscheidung von CO₂ aus dem Abgas einer mit einem kohlenstoffhaltigen Brennstoff unter Zuhilfenahme von Luft als Oxidationsmittel befeuerten Brennkammer:
mit einem Absorber (1) und einem Desorber (2), die ein Sorbens-Kreislauf-Systems bilden, in dem ein Sorbens im Kreislauf gefahren wird,
wobei sich das Sorbens in dem Absorber (1) mit dem CO₂ des Abgasstroms chemisch verbindet und wobei das CO₂-beladene Sorbens als gasgetragener Feststoffpartikelstrom dem Desorber (2) zugeführt und in diesem unter Wärmezufuhr regeneriert wird, wodurch regeneriertes Sorbens und ein im Wesentlichen nur CO₂ enthaltendes Gas gebildet wird,
**dadurch gekennzeichnet,**
**dass** zur Erzeugung der zum Regenerieren des Sorbens erforderliche Wärme eine der Beheizung des Desorbers (2) dienenden Desorberwärme-Brennkammer (7) zur Verbrennung eines Brennstoffes mit Luft als Oxidationsmittel vorgesehen ist und
**dass** zur Übertragung der in der Desorberwärme-Brennkammer (7) erzeugten Wärme auf den Desorber (2) ein Wärmetauscher (14) vorgesehen ist,
**dass** die Desorberwärme-Brennkammer (7) eine Wirbelschicht-Brennkammer ist,
**dass** zwischen der Desorberwärme-Brennkammer (7) und dem Wärmetauscher (14) ein Stoffkreislauf durch einen fluidisierten Festkörper-Massenstrom etabliert wird, aus dem über eine Abscheideeinrichtung (6) Abgas ausgeleitet wird,
und **dass** die von den Partikeln des fluidisierten Festkörper-Massenstrom transportierte Wärme teilweise auf einen Fließbettkühler (8) übertragen wird, der über den Wärmetauscher (14) gekühlt wird, der dem Fließbett Wärme entzieht und an den Desorber (2) überträgt,
wobei die Desorberwärme-Brennkammer (7) nur der Beheizung des Desorbers (2) dient oder zusätzlich das in der Abscheideeinrichtung (6) ausgeleitete Abgas über einen der Wärmeauskopplung dienenden Wärmetauscher (9) geleitet wird.

11. Vorrichtung nach Anspruch 10, **dadurch gekennzeichnet, dass** der Wärmetauscher (8) Heatpipes aufweist.

## Claims

1. Process for separating CO₂ from the waste gas of a combustion chamber, which is fired with a fuel containing carbon using air as oxidising agent, wherein the process comprises the steps:
introducing a waste gas flow containing CO₂ directed out of the combustion chamber into an absorber (1) of a sorbent circulation system having at least one absorber (1) and one desorber (2), in which system a sorbent is circulated, wherein the sorbent in the absorber (1) combines chemically with the CO₂ of the waste gas flow and wherein
the CO₂-laden sorbent is fed to the desorber (2) as gas-borne solid particle flow and is regenerated therein with the supply of heat, as a result of which regenerated sorbent and a gas substantially containing only CO₂ are formed,
**characterised in that**
the heat required to regenerate the sorbent is generated in a desorber heat combustion chamber (7), which serves to heat the desorber (2) and is configured as a fluidised bed combustion chamber, by burning a fuel with air as oxidising agent and is fed to the desorber via a heat exchanger (14),
that a material circuit is established between the desorber heat combustion chamber (7) and the heat exchanger (14) by means of a fluidised solid mass flow and waste gas is directed out of said material circuit via a separator device (6),
and that the heat transported by the particles of the fluidised solid mass flow is transferred partially to a fluidised bed cooler (8), which is cooled by means of the heat exchanger (14), which draws heat from the fluidised bed and transfers it to the desorber (2),
wherein the desorber heat combustion chamber (7) only serves to heat the desorber (2) or additionally the waste gas extracted in the separator device (6) is directed over a heat exchanger (9) that serves to extract heat.

2. Process according to claim 1, **characterised in that** the extracted waste gas is fed to the absorber (1).

3. Process according to claim 2, **characterised in that** extracted waste gas is firstly fed to a desulphurisation plant (10) and then to the absorber (1).

4. Process according to claim 1, **characterised in that** waste gas coming from at least one further combustion chamber (11) is additionally fed to the absorber (1).

5. Process according to claim 4, **characterised in that** the further combustion chamber (11) belongs to a steam generator.

6. Process according to claim 1, **characterised in that** the residual gas emitted by the desorber (2) is directed over a heat exchanger (3) that serves to extract heat.

7. Process according to claim 1, **characterised in that** a sorbent mass flow, which consists of the carbonate fluidised by a gas flow and the sorbent, is established between the desorber (2) and the absorber (1).

8. Process according to claim 7, **characterised in that** the sorbent mass flow is directed over a heat exchanger (1c) that serves to extract heat.

9. Process according to claim 1, **characterised in that** a substantially CO₂-free residual gas and a CO₂-laden sorbent flow, which is fed to the desorber (2), are obtained from the sorbent mass flow by means of a separator device (1a).

10. Device for separating CO₂ from the waste gas of a combustion chamber, which is fired with a fuel containing carbon using air as oxidising agent:
with an absorber (1) and a desorber (2), which form a sorbent circulation system, in which a sorbent is circulated,
wherein the sorbent in the absorber (1) is combined chemically with the CO₂ of the waste gas flow and wherein the CO₂-laden sorbent is fed to the desorber (2) as gasborne solid particle flow and is regenerated therein with the supply of heat, as a result of which regenerated sorbent and a gas substantially containing only CO₂ arc formed,
**characterised in that**
to generate the heat required to regenerate the sorbent a desorber heat combustion chamber (7) serving to heat the desorber (2) is provided to bum a fuel with air as oxidising agent, and
that a heat exchanger (14) is provided to transfer the heat generated in the desorber heat combustion chamber (7) to the desorber (2),
that the desorber heat combustion chamber (7) is a fluidised bed combustion chamber,
that a material circuit is established between the desorber heat combustion chamber (7) and the heat exchanger (14) by means of a fluidised solid mass flow and waste gas is directed out of said material circuit via a separator device (6),
and that the heat transported by the particles of the fluidised solid mass flow is transferred partially to a fluidised bed cooler (8), which is cooled by means of the heat exchanger (14), which draws heat from the fluidised bed and transfers it to the desorber (2),
wherein the desorber heat combustion chamber (7) only serves to heat the desorber (2) or additionally the waste gas extracted in the separator device (6) is directed over a heat exchanger (9) that serves to extract heat.

11. Device according to claim 10, **characterised in that** the heat exchanger (8) has heat pipes.

## Revendications

1. Procédé destiné à la séparation de CO₂ à partir des gaz brûlés d'une chambre de combustion alimentée avec un combustible contenant du carbone, à l'aide d'air en tant qu'agent d'oxydation, le procédé comprenant les étapes suivantes:
introduction d'un flux de gaz brûlés, contenant du CO₂ et évacué de la chambre de combustion, dans un absorbeur (1) d'un système de circuit de sorbant qui présente au moins un absorbeur (1) et un désorbeur (2) et dans lequel un sorbant est mis en circulation, le sorbant se liant chimiquement dans l'absorbeur (1) avec le CO₂ du flux de gaz brûlés, et le sorbant chargé en CO₂ étant amené, en tant que flux de particules solides véhiculé par un gaz, au désorbeur (2) et étant régénéré dans celui-ci avec apport de chaleur, produisant ainsi un sorbant régénéré et un gaz ne contenant essentiellement que du CO₂,
**caractérisé en ce que**
la chaleur nécessaire à la régénération du sorbant est produite dans une chambre de combustion pour chaleur de désorbeur (7), servant au chauffage du désorbeur et réalisée sous forme de chambre de combustion à lit fluidisé, par combustion d'un combustible avec de l'air en tant qu'agent d'oxydation, et est amenée au désorbeur par l'intermédiaire d'un échangeur de chaleur (14),
un circuit de matière est établi entre la chambre de combustion pour chaleur de désorbeur (7) et l'échangeur de chaleur (14), par un flux massique fluidisé de solides dont des gaz brûlés sont extraits par l'intermédiaire d'un dispositif de séparation (6),
et **en ce que** la chaleur transportée par les particules du flux massique fluidisé de solides est en partie transmise à un refroidisseur à lit fluidisé (8) qui est refroidi par l'intermédiaire de l'échangeur de chaleur (14), lequel extrait de la chaleur du lit fluidisé et la transmet au désorbeur (2),
la chambre de combustion pour chaleur de désorbeur (7) ne servant qu'au chauffage du désorbeur (2), ou les gaz brûlés extraits dans le dispositif de séparation (6) étant guidés pour passer en plus par un échangeur de chaleur (9) servant à l'extraction de chaleur.

2. Procédé selon la revendication 1, **caractérisé en ce que** les gaz brûlés extraits sont amenés à l'absorbeur (1).

3. Procédé selon la revendication 2, **caractérisé en ce que** des gaz brûlés extraits sont d'abord amenés à un dispositif de désulfuration (10) et ensuite à l'absorbeur (1).

4. Procédé selon la revendication 1, **caractérisé en ce que**, sont amenés en plus à l'absorbeur (1) des gaz brûlés qui proviennent au moins d'une chambre de combustion (11) supplémentaire.

5. Procédé selon la revendication 4, **caractérisé en ce que** la chambre de combustion (11) supplémentaire fait partie d'un générateur de vapeur.

6. Procédé selon la revendication 1, **caractérisé en ce que** le gaz résiduel émis par le désorbeur (2) est guidé pour passer par un échangeur de chaleur (3) servant à l'extraction de chaleur.

7. Procédé selon la revendication 1, **caractérisé en ce que**, entre le désorbeur (2) et l'absorbeur (1), est établi un flux massique de sorbant qui est constitué du carbonate, fluidisé par un flux de gaz, et du sorbant.

8. Procédé selon la revendication 7, **caractérisé en ce que** le flux massique de sorbant est guidé pour passer par un échangeur de chaleur (1c) servant à l'extraction de chaleur.

9. Procédé selon la revendication 1, **caractérisé en ce qu'**un dispositif de séparation (1a) permet d'obtenir, à partir du flux massique de sorbant, un gaz résiduel, sensiblement exempt de CO₂, et un flux de sorbant chargé en CO₂ qui est amené au désorbcur (2).

10. Dispositif destiné à la séparation de CO₂ à partir des gaz brûlés d'une chambre de combustion alimentée avec un combustible contenant du carbone, à l'aide d'air en tant qu'agent d'oxydation :
comprenant un absorbeur (1) et un désorbeur (2) qui forment un système de circuit de sorbant dans lequel un sorbant est mis en circulation,
le sorbant se liant chimiquement dans l'absorbeur (1) avec le CO₂ du flux de gaz brûlés, et le sorbant chargé en CO₂ étant amené, en tant que flux de particules solides véhiculé par un gaz, au désorbeur (2) et étant régénéré dans celui-ci avec apport de chaleur, produisant ainsi un sorbant régénéré et un gaz ne contenant essentellement que du CO₂,
**caractérisé en ce que**
pour produire la chaleur nécessaire à la régénération du sorbant, il est prévu une chambre de combustion pour chaleur de désorbeur (7) servant au chauffage du désorbeur (2) et destinée à brûler un combustible avec de l'air en tant qu'agent d'oxydation, et
**en ce qu'**un échangeur de chaleur (14) est prévu pour transmettre au désorbeur (2) la chaleur produite dans la chambre de combustion pour chaleur de désorbeur (7),
**en ce que** la chambre de combustion pour chaleur de désorbeur (7) est une chambre de combustion à lit fluidisé,
**en ce qu'**un circuit de matière est établi entre la chambre de combustion pour chaleur de désorbeur (7) et l'échangeur de chaleur (14), par un flux massique fluidisé de solides dont des gaz brûlés sont extraits par l'intermédiaire d'un dispositif de séparation (6),
et **en ce que** la chaleur transportée par les particules du flux massique fluidisé de solides est en partie transmise à un refroidisseur à lit fluidisé (8) qui est refroidi par l'intermédiaire de l'échangeur de chaleur (14), lequel extrait de la chaleur du lit fluidisé et la transmet au désorbeur (2),
la chambre de combustion pour chaleur de désorbeur (7) ne servant qu'au chauffage du désorbeur (2), ou les gaz brûlés extraits dans le dispositif de séparation (6) sont guidés pour passer en plus par un échangeur de chaleur (9) servant à l'extraction de chaleur.

11. Dispositif selon la revendication 10, **caractérisé en ce que** l'échangeur de chaleur (8) présente des tubes de chauffe.
